# EUROPEAN PATENT SPECIFICATION

(11) **EP 4 208 991 B1**
(45) Date of publication and mention of the grant of the patent: **10.09.2025**
(21) Application number: 21926084.1
(22) Date of filing: 17.02.2021
(51) Int. Cl.: H04L 41/14, H04L 41/16, H04L 43/08

(54) **ENTITIES AND METHODS FOR TRAINED DATA MODEL SELECTION IN 5G MOBILE NETWORKS**
ENTITÄTEN UND VERFAHREN ZUR AUSWAHL EINES TRAINIERTEN DATENMODELLS IN 5G-MOBILNETZWERKEN
ENTITÉS ET PROCÉDÉS DE SÉLECTION DE MODÈLE DE DONNÉES ENTRAÎNÉS DANS DES RÉSEAUX MOBILES 5G

(43) Date of publication of application: 12.07.2023
(73) Proprietor: Huawei Technologies Co., Ltd., Shenzhen, Guangdong 518129 (CN)
(72) Inventor: WEI, Qing, 80992 Munich (DE); XIN, Yang, Shenzhen, Guangdong 518129 (CN)
(74) Representative: Roth, Sebastian
(86) International application number: PCT/CN2021/076667
(87) International publication number: WO 2022/174362

(56) References cited:
- EP-A1- 4 020 252
- CN-A- 107 766 940
- CN-A- 110 569 288
- CN-A- 110 569 288
- CN-A- 111 757 353
- CN-A- 112 311 564
- SIMEONE OSVALDO: "A Very Brief Introduction to Machine Learning With Applications to Communication Systems", IEEE TRANSACTIONS ON COGNITIVE COMMUNICATIONS AND NETWORKING, IEEE, USA, vol. 4, no. 4, 1 December 2018 (2018-12-01), pages 648 - 664, XP011701639, DOI: 10.1109/TCCN.2018.2881442
- JIANG CHUNXIAO ET AL: "Machine Learning Paradigms for Next-Generation Wireless Networks", IEEE WIRELESS COMMUNICATIONS, COORDINATED SCIENCE LABORATORY; DEPT. ELECTRICAL AND COMPUTER ENGINEERING; UNIVERSITY OF ILLINOIS AT URBANA-CHAMPAIGN, US, vol. 24, no. 2, 1 April 2017 (2017-04-01), pages 98 - 105, XP011647475, ISSN: 1536-1284, [retrieved on 20170424], DOI: 10.1109/MWC.2016.1500356WC
- KARN RUPESH RAJ ET AL: "Dynamic Autoselection and Autotuning of Machine Learning Models for Cloud Network Analytics", IEEE TRANSACTIONS ON PARALLEL AND DISTRIBUTED SYSTEMS, IEEE, USA, vol. 30, no. 5, 1 May 2019 (2019-05-01), pages 1052 - 1064, XP011719429, ISSN: 1045-9219, [retrieved on 20190409], DOI: 10.1109/TPDS.2018.2876844
- "3rd Generation Partnership Project; Technical Specification Group Services and System Aspects; Study on enablers for network automation for the 5G System (5GS); Phase 2 (Release 17)", 3GPP STANDARD; TECHNICAL REPORT; 3GPP TR 23.700-91, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.2.0, 30 November 2020 (2020-11-30), Mobile Competence Centre ; 650, route des Lucioles ; F-06921 Sophia-Antipolis Cedex ; France , pages 1 - 378, XP051961722
- HUAWEI, HISILICON, ETRI: "KI #19, Sol #56: Update to further clarify ML Model sharing between NWDAF instances", 3GPP DRAFT; S2-2006919, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. SA WG2, no. e-meeting; 20201012 - 20201023, 2 October 2020 (2020-10-02), Mobile Competence Centre ; 650, route des Lucioles ; F-06921 Sophia-Antipolis Cedex ; France , XP051938024
- "3rd Generation Partnership Project; Technical Specification Group Services and System Aspects; Study on enablers for network automation for the 5G System (5GS); Phase 2 (Release 17)", 3GPP STANDARD; TECHNICAL REPORT; 3GPP TR 23.700-91, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. V1.1.0, 2 November 2020 (2020-11-02), Mobile Competence Centre ; 650, route des Lucioles ; F-06921 Sophia-Antipolis Cedex ; France , pages 1 - 353, XP051961616

## Description

### TECHNICAL FIELD

The present disclosure relates to a new generation mobile network, for instance, to a 5^{th} generation (5G) mobile network. In particular, the disclosure relates to the selection of one or more trained data models, for instance, for the purpose of generating analytics information in the mobile network. To this end, the disclosure proposes network entities and corresponding methods, which support the selection and discovery of the trained data models.

A first network entity (e.g. a data model management entity) may manage and provide information on a plurality of trained data models. A second network entity (e.g. a model provider entity) may register trained data models at the first network entity, and may provide the trained data models to a third network entity for consumption. The third network entity (e.g. a model consumer entity) may discover trained data models via the first network entity, and may use information obtained from the first network entity to obtain the trained data models for consumption from the second network entity.

In this disclosure, the trained data models may, in particular, be machine learning (ML) models.

### BACKGROUND

Trained data models, particularly such based on ML technology, are used in mobile networks since 5G, to support network control and management decisions. The 3^{rd} Generation Partnership Project (3GPP) Release 16 introduces a new network function called Network Data Analytics Function (NWDAF) in the service based 5G core (5GC) network architecture. The NWDAF is used to generate data analytics based on collected network data. In particular, 3GPP specifies that:
- Multiple NWDAF instances may be deployed in one network (e.g., for different analytics IDs, in order to cover the analytics of different areas).
- Some NWDAF instances may host a "Model Training" logical function, which can train data models, like ML models, and may expose new training services (i.e., for providing trained ML models).
- Some NWDAF instances may host an "Analytics" logical function, which can perform inference, derive analytics information, and expose an analytics service, based on a trained ML model.

This means, an NWDAF instance could obtain a ML model from multiple other NWDAF instances. If said NWDAF instance also hosts the "Model Training" logical function, it can perform further training of the obtained ML model, and can provide the further trained ML model to other NWDAF instances.

This leads to the problem how an NWDAF instance can accurately identify a ML model, according to a certain selection criterion, from multiple NWDAF instances that all host the "Model Training" logical function, and thus can all train the ML models. Thereby, the certain selection criteria could be:
- The original ML model (the one not further trained by any NWDAF).
- A trained ML model to compare with a previous ML model.
- The most relevant ML models.
- An update of a current ML model from other ML model sources.

Accordingly, there is a need to accurately identify and discover a trained data model, like a ML model, which is trained one or multiple times by multiple network entities in a 5G mobile network.

EP 4020252 A1 discloses a method comprising: determining analysis data according to a data analysis request; determining an analysis model according to the data analysis request; and obtaining a data analysis result according to the analysis data and the analysis model.

### SUMMARY

The present disclosure, and its embodiments and implementations described below, base further on the following considerations of the inventors.

In the current 5G Service Based Architecture (SBA), each NWDAF may register its ML model provision capability with the Network Repository Function (NRF). A ML model consumer NWDAF may then discover the required ML model by inquiring the NRF. Afterwards, the consumer NWDAF can interact with a ML model provider NWDAF (as discovered via the NRF), to retrieve the required ML model.

3GPP states that the *"NWDAF can register its capability to expose a trained ML model in the NRF",* and that the *"registered MLModelProvision and MLModellnfo service in the NRF includes service parameters indicating the available ML models the ML Model Provider NWDAF can provide (e.g., Analytics IDs).*

In this way, a ML model consumer NWDAF is able to discover a ML model by using a ML model parameter (e.g., Analytics identification (ID), which indicates the type of data analytics such as User Equipment (UE) mobility, network performance, Network Function (NF) load, etc., ML model ID and version), together with parameters of the ML model provider NWDAF, e.g., an area of interest.

Other approaches propose that registration information for registering a ML model at the NRF (e.g., a NWDAF profile) may include a model ID, a model time or a model version.

However, the above-described approaches cannot be used to accurately discover a ML model with a ML model ID or version, or an area of interest, which is unknown. Moreover, considering only the model ID, a time, or a version of the ML models, is not sufficient to distinguish between combined ML models or between ML models trained multiple times by different entities, e.g., NWDAFs. As a consequence, unnecessarily requested ML models may be caused (i.e., leading to signaling and processing overhead).

There are several tools for software version management, e.g., Tensor flow (a platform for ML model training and inference) or Apache Subversion (an open source centralized version control system), etc. All of these tools are based on a centralized version management platform, which are featured by:
- 2-party interaction between a server and a client for software version/ML model retrieving and discovery (server centric).
- Global unique ML model/Software version and ID.
- Selection at the client (full knowledge at the client requires tight synchronization with the server).

In contrast, 5G network use SBA, which is featured by:
- 3-party interaction for ML model retrieving and discovery (consumer centric).
- Local unique ML model version and ID.
- Selection at the consumer and NRF (partial knowledge at the consumer requires loss synchronization with the NRF).

Therefore, centralized version control and management can neither work directly, nor work efficiently, in the 5GC SBA based architecture for ML model retrieving and discovery.

In view of the above, embodiments of this disclosure aim to provide an improved procedure for selecting trained data models in a mobile network, in particular, in a 5G mobile network. An objective is to provide entities and methods that allow an accurate identification and discovery of trained data models, e.g. ML models, in the mobile network. Especially, the procedure should work efficiently for a case, in which the trained data models may have been trained multiple times by different network entities in the mobile network.

The objective is achieved by the embodiments of the invention as described in the enclosed independent claims. Advantageous implementations of the embodiments of the invention are further defined in the dependent claims. In the following, parts of the description and drawings referring to embodiments not covered by the claims, are not part of the invention, but are illustrative examples necessary for understanding the invention.

### BRIEF DESCRIPTION OF DRAWINGS

The above described aspects and implementation forms will be explained in the following description of specific embodiments in relation to the enclosed drawings, in which
- FIG. 1: shows a first network entity according to an embodiment of the disclosure.
- FIG. 2: shows a second network entity according to an embodiment of the disclosure.
- FIG. 3: shows a third network entity according to an embodiment of the disclosure.
- FIG. 4: shows an interaction between a first, second, and third network entity according to an embodiments of the disclosure. **In** particular, it shows a framework for managing, selecting and using trained data models in a mobile network.
- FIG. 5: shows an example of data model family information maintained by the first network entity according to an embodiment of the disclosure.
- FIG. 6: shows an example of a data structure for data model family information maintained by the first network entity according to an embodiment of the disclosure.
- FIG. 7: shows configuration of a first network entity, and data model registration at the first network entity, according to an embodiment of the disclosure.
- FIG. 8: illustrates the usage of data model family information for trained data model discovery at the first network entity according to an embodiment of the disclosure.
- FIG. 9: illustrates the usage of data model family information for data model discovery, retrieval, and processing at the third network entity according to an embodiment of the disclosure.
- FIG. 10: illustrates signaling for data model registration, discovery, and consumption, respectively.
- FIG. 11: shows an example procedure for data model registration, discovery, and consumption, respectively, performed by a model provider NWDAF (second network entity), a model consumer NWDAF (third network entity) and a NRF (first network entity).
- FIG. 12: shows an example data structure for data model family information in a NRF (first network entity), wherein an OAM configures an initial ML model in the data model family information.
- FIG. 13: shows a method for data model information management according to an embodiment of the disclosure.
- FIG. 14: shows a method for data model discovery according to an embodiment of the disclosure.
- FIG. 15: shows a method for providing trained data models according to an embodiment of the disclosure.
- FIG. 16: shows a method for consuming trained data models according to an embodiment of the disclosure.

### DETAILED DESCRIPTION OF EMBODIMENTS

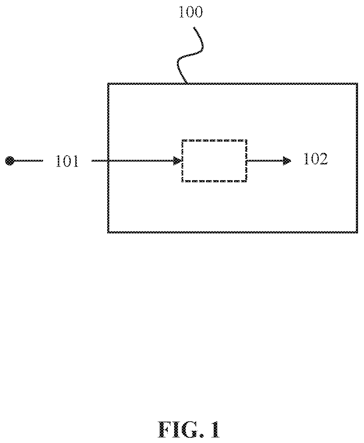

FIG. 1 shows a first network entity 100 according to an embodiment of the disclosure. The first network entity may be an entity for managing data model information, and may generally function as NRF. The first network entity 100 may accordingly be a network entity of a mobile network, e.g., a 5G mobile network and may be arranged in the control plane thereof.

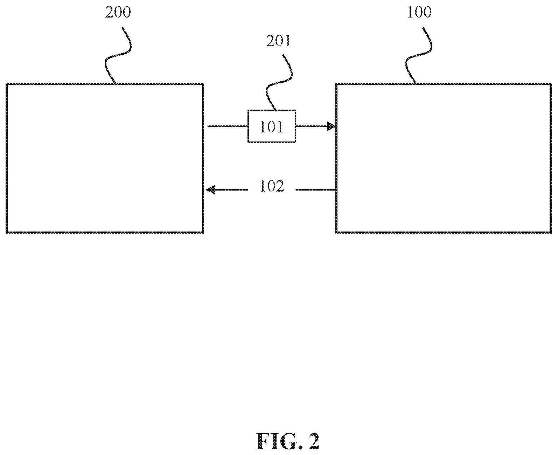

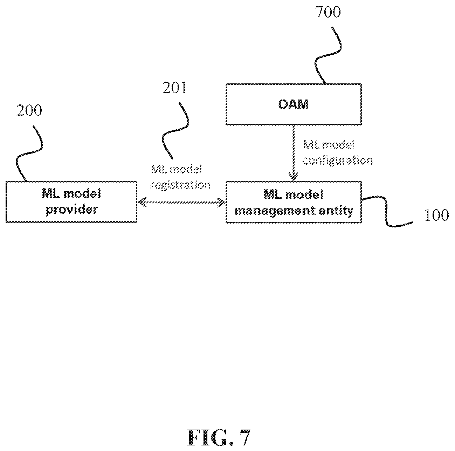

The first network entity 100 is configured to obtain data model information 101 of a plurality of trained data models. The data model information 101 of any trained data model of the plurality of trained data models may comprise an ID of the trained data model. The information 101 may also indicate one or more IDs of one or more parent data models, or an initial data model related to the trained network model. Further, the information 101 may comprise an analytics ID related to the trained data model. The first network entity 100 may, for example, receive the data model information 101 from a second network entity 200, as will be described with respect to FIG. 2. The first network entity 100 may also be configured with the data model information 101, or may generate the data model information 101 based on some external input or configuration (described later with respect to FIG. 7).

Further, the first network entity 100 is configured to generate data model family information, in particular, based on the obtained data model information 101. The data model family information 102 comprises at least a generation number and/or a family ID of each trained data model of the plurality of trained data models. That is, each trained data model may be identified by the family ID, which indicates to which of one or more data model families the trained data model belongs to, and/or the generation number, in particular, within the data model family the trained data model belongs to. The data model family information may further include relationship information between the trained data model and other trained data models in the same data model family.

FIG. 2 shows a second network entity according to an embodiment of the disclosure. The second network entity 200 may be a model provider entity, i.e., configured to provide one or more trained data models. For instance, the second network entity 200 may function as NWDAF, UDR, AF, NEF, a management plane network function, or other NF in the mobile network, e.g., a 5G mobile network, and may be arranged in the control plane thereof.

The second network entity 200 is configured to provide a registration request 201 to a first network entity 100, for instance, the first network entity 100 described with respect to FIG. 1. The registration request 201 includes data model information 101 of a set of trained data models provided by the second network entity 200. That is, the data model information 101 shown in FIG. 2 may be at least a part of the data model information 101 obtained by the first network entity 100 in FIG. 1. Accordingly, the data model information 101 included in the registration request 201 may comprise the same pieces of information as described above. The second network entity 200 may thus be configured to register the set of trained data models at the first network entity 100.

In response to the registration request 201, the second network entity 200 receives data model family information 102 from the first network entity 100, which may be the information 102 described above with respect to FIG. 1. Accordingly, the data model family information 102 comprises at least a generation number and/or a family ID of each trained data model of the set of trained data models, and may further comprise relationship information.

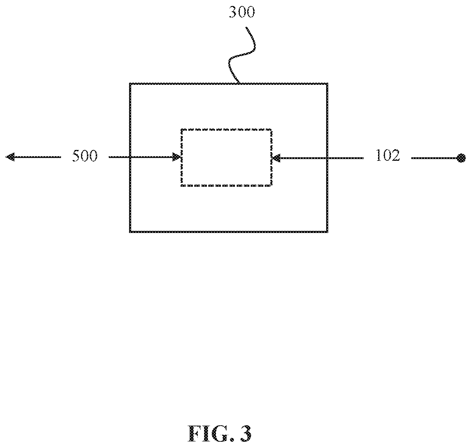

FIG. 3 shows a third network entity 300 according to an embodiment of the disclosure. The third network entity 300 may be a model consumer entity, i.e., configured to consume or use one or more trained data models. For instance, the third network entity 300 may function as NWDAF in the mobile network, e.g., a 5G mobile network, and may be arranged in the control plane thereof. The third network entity 300 may be configured to provide analytics information in the mobile network. It may, to this end, include one or more instances, wherein each instance may be configured to provide analytics information related to one or more analytics ID. Each analytics information output provided by the third network entity 300 may be generated based on one or more consumed trained data models.

The third network entity 300 is configured to obtain data model family information 102, e.g., the data model family information 102 generated by the first network entity 100 in FIG. 1. The third network entity 300 may receive the data model family information from the first network entity 100, for example, by discovery or in response to sending a discovery request to the first network entity. The third network entity 300 may also receive the data model family information from the second network entity 200, for example, by data model consumption or in response to sending a consumption request to the second network entity. As mentioned above, the data model family information 102 comprises at least a generation number and/or a family ID of each trained data model, for instance, of at least the one or more trained data models that the third network entity intends to consume. Further, it may include relationship information.

The third network entity 300 is further configured to perform at least one of the following four step. First, to obtain the one or more trained data models, which it intends to consume, based on the data model family information 102. For instance, it can select certain trained data models to consume from a plurality of available trained data models based on the information 102. Second, it may use the one or more trained data models based on the data model family information 102, for example, to generate analytics output. Third, it may process the one or more trained data models based on the data model family information 102, for example, to update, train, merge, or remove any one or more trained data models. Fourth, it may discover the one or more trained data models based on the data model family information, for instance, by sending a discovery request to the first network entity 100 for further information.

The first network entity 100 and/or the second network entity 200 and/or the third network entity 300 may comprise a processor or processing circuitry (not shown) configured to perform, conduct or initiate the various operations of the respective network entity 100, 200, 300 described herein. The processing circuitry may comprise hardware and/or the processing circuitry may be controlled by software. The hardware may comprise analog circuitry or digital circuitry, or both analog and digital circuitry. The digital circuitry may comprise components such as application-specific integrated circuits (ASICs), field-programmable arrays (FPGAs), digital signal processors (DSPs), or multi-purpose processors.

The network entities 100, 200, 300 may further comprise memory circuitry, which stores one or more instruction(s) that can be executed by the processor or by the processing circuitry, in particular under control of the software. For instance, the memory circuitry may comprise a non-transitory storage medium storing executable software code which, when executed by the processor or the processing circuitry, causes the various operations of respective network entity 100, 200, 300 to be performed.

In one embodiment, the processing circuitry comprises one or more processors and a non-transitory memory connected to the one or more processors. The non-transitory memory may carry executable program code which, when executed by the one or more processors, causes the first network entity 100 and/or the second network entity 200 and/or the third network entity 300 to perform, conduct or initiate the operations or methods described herein.

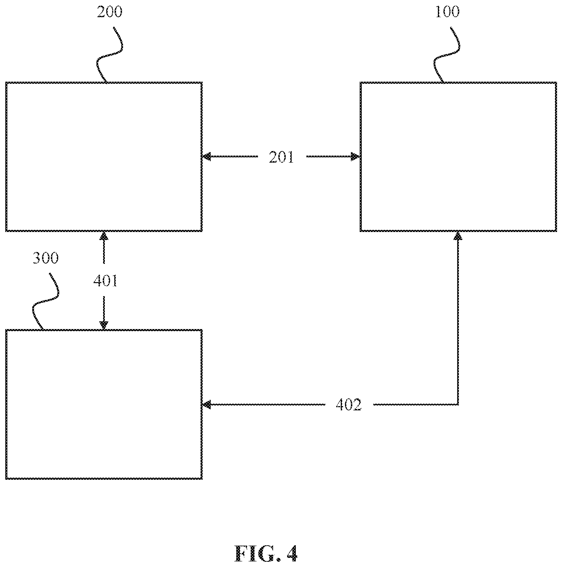

As described above, this disclosure proposes network entities (and corresponding methods, see later) for managing trained data models, e.g. ML models, which may be trained one or multiple times by different network entities in a family structure in a SBA. The data model family information 102 may be used for both data model discovery and data model consumption. The network entities described above may form a system or apparatus for a mobile network (e.g., they may all be configured on one machine), as shown in FIG. 4, wherein:
The first network entity 100 (data model management entity, e.g., NRF), may build and maintain data model information 101 in a data structure (data model family information 102, which may be a hierarchy and/or a tree-like data structure), and may provide the data model family information 102, or may provide data model information 101 based on the data model family information 102, upon receiving a discovery request 402 from the third network entity 300.
The second network entity 200 (data model provider entity, e.g., hosted by an NWDAF) may provide data model information 101 to the first network entity 100, for example, in the registration request 202. The data model information 101 is suitable for building the data model family information 102 at the first network entity 100. Further, it may receive the data model family information 102 from the first network entity 100 in response, and may provide it together with one or more trained data models to a data model consumer network entity 300, for instance, upon receiving a consumption request 401 from the third network entity 300.
The third network entity 300 (data model consumer entity, e.g., hosted by an NWDAF) may discover data model information 101 and/or data model family information 102, for instance, by sending the discovery request 402 to the first network entity 100, and may select and process one or more trained data models based on the data model family information 102, for instance, as obtained from the second network entity 200 upon sending the consumption request 401 to the second network entity 200.

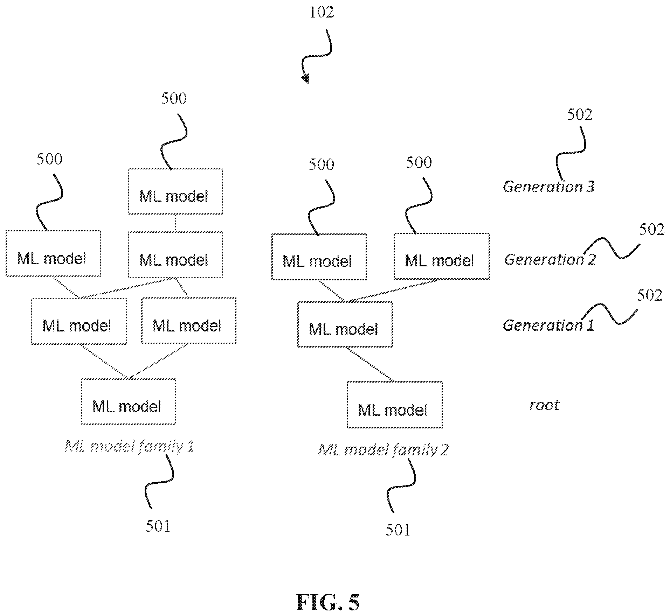

FIG. 5 shows an example of the data model family information 102 at the first network entity 100. As an example, the trained data models 500 are ML models. The data model family information 102 in FIG. 5 is represented by a family tree, i.e., it may be divided into one or more data model families, wherein each data model family is associated with a family ID 501 (e.g., family 1, family 2, etc.). Each family may include two or more trained data models 500. Each trained data model 500 may be associated with a generation number 502 (e.g., root/generation 0, generation 1, generation 2, generation 3, etc.). Accordingly, the data model family information 102 comprises at least the family ID 501 and/or the generation number 502. Further, the data model family information 102 may include relation relationship information between two or more trained data models 500 belonging to the same data model family. For example, the relationship information between the two or more trained data models 500 belonging to the same data model family may indicate a hierarchy and/or a tree-like structure of the two or more trained data models 500 (as illustrated in FIG. 5). Alternatively, or additionally, the relationship information between the two or more trained data models 500 belonging to the same data model family may indicate whether a trained data model 500 of the two or more trained data models 500 is at least one of a parent data model and a child data model of another trained data model 500 of the two or more trained data models 50 (indicated by the connection lines between the trained data models 500 in each data model family in FIG. 5). In FIG. 5, the data model at the bottom (root) may be an initial trained data model, from which all other trained data models 500 in the family are derived from. The trained data models 500 of the next generation (generation 1) may be child data models of the initial data model 500, and the trained data models 500 of the next generation (generation 2) may be child data models of the trained data models 500 of generation 1. And so on. Vice versa, the trained data models 500 of generation 1 may be parent data models of the trained data models 500 of generation 2 (if directly connected by a connection line).

In the following, more details about embodiments and implementation examples of the different network entities 100, 200 and 300 are provided.

The second network entity 200 (e.g., NWDAF) may register the data model information 101 via registration request 201 (e.g., the data model information 101 including information on family ID 501 and/or ID(s) of parent data model(s) of the trained data models 500) to the first network entity 100 (e.g., NRF). Further, it may provide one or more trained data models 500 to the third network entity 300 (e.g., NWDAF) with data model family information 101 (i.e., at least one of family ID 501 and generation number 502). Notably, the second network entity 200 can also be a UDR, AF, or AF via NEF, or a management plane network function.

The first network entity 100 (e.g., NRF) may be configured to build the model family tree shown in FIG. 5 (data model family information 102) using the received data model information 101. Further, it may provide the data model family information 102 (i.e., at least one of family ID 501 and generation number 502) to the registered second network entity 200, and may use the data model family information 102 for data model selection.

The third network entity 300 (e.g., NWDAF) may use the data model family information 102 (i.e., at least one of family ID 501 and generation number 502) for trained data model discovery (e.g., inquiry to the first network entity 100 via discovery request 402), and further for data model processing (which may include further data model selection, training, combining, using that for analytics generation, etc.).

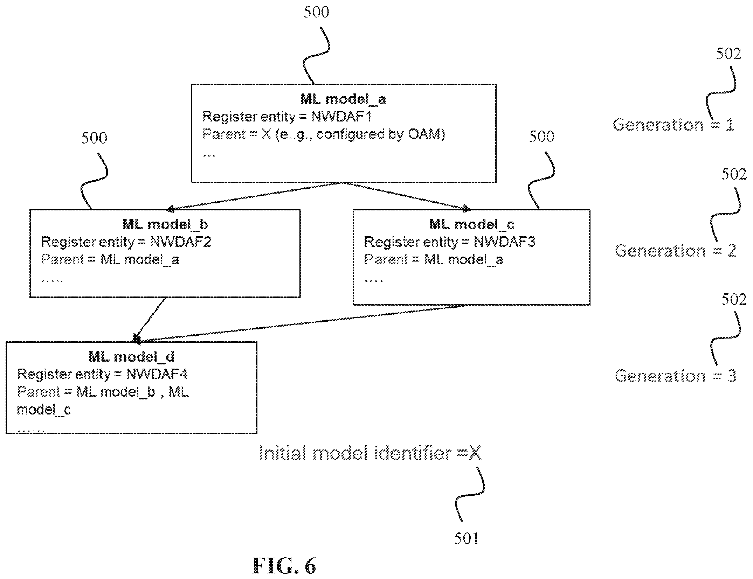

An example of a data structure for the data model family information 102 maintained by the first network entity 100, in particular, the data structure of the data model tree (here trained data models 500 are ML models) is shown in FIG. 6. The data structure may include:
- Data model family ID 501 for each trained data model 500 (e.g., an initial model identifier). The data model family ID 501 may be a global unique identifier defined by the mobile network operator or a data model provider, or a combination of them. It can be the same as the initial model ID. The initial model may be the data model which is not further trained by any network entity (e.g., NWDAF), and from which all trained data models 500 in the data model family are derived (e.g., by updating, training, merging etc.).
- Model generation number 502 of each trained data model 500, which may be an integer. The model generation number 502 represents the times of training performed by different training network functions (e.g., NWDAF) on an initial data model. The initial data model thus may have the generation number of 0 (i.e., may be the root of a data model family).
- Model parent information, indicated by one or more model identifiers. Each model identifier may be a combination of a provider Network Function (NF) ID and a local Model ID, a global Model ID, or a NULL in case of an initial data model. The model parent information may indicate the trained data model(s) 500 used to train the currently considered trained data model 500.
- Registered entity as already specified in 3GPP: e.g., NWDAF ID
- Additional parameters as already specified in 3GPP: Analytics ID, etc.

A shown in FIG. 7, the family ID 501 (e.g., initial model ID) and model parent information can be either configured by Operations, administration and management (OAM) 700 at the first network entity 100 as part of a data model information 101 (e.g., for an initial data model 500, for a data model 500 provided by some external data model provider) or may be provided as part of the data model registration request 201 to the first network entity 100 from the second network entity 200.

The model generation(s) (numbers) are generated by the first network entity 100 based on the data model information 101 of the plurality of data models 500 in the registration request 201 (e.g., initial model ID/family ID, model parent). The second network entity 200 may obtains the initial model ID/family ID and model parent information either via OAM 700 configuration (e.g., as an initial data model) or by a previous data model provider.

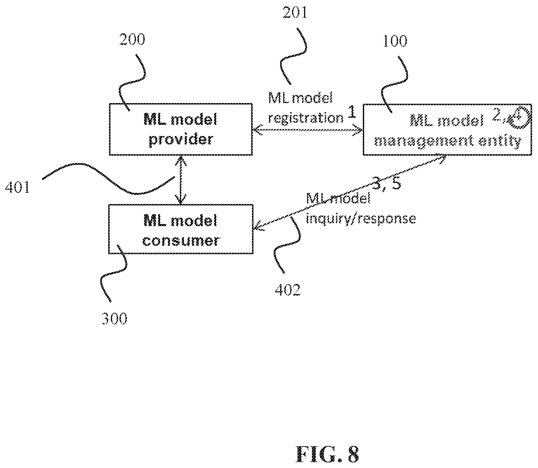

FIG. 8 illustrates the usage of data model family information 102 for trained data model discovery at the first network entity 100. This may include the following steps:
1. Receive a data model registration request 201 from the second network entity 200 with data model information 101 (e.g. initial model ID, model parent, and optional model generation number).
2. Build data model family information 102 (data structure) based on the received data model (registration) information 101, and acknowledge to the second network entity 200 the data model information 101, per data model, with a model generation number 502 and/or a model family ID 501. In this step, optionally, a validation/check of the registered data model information 101 may be performed as described later.
3. Receive a data model discovery request 402 from the third network entity 300 (e.g., analytics ID, model family/initial model ID, model generation number, etc.).
4. Select trained data models 500 based on the registered data model information 101 and the data model family information 102, and the discovery request 402.
5. Send the information on the discovered data models 500 (e.g., address of the second network entity 200, e.g., correspondent NWDAFs, model generation number 502, model family ID 501, etc.).

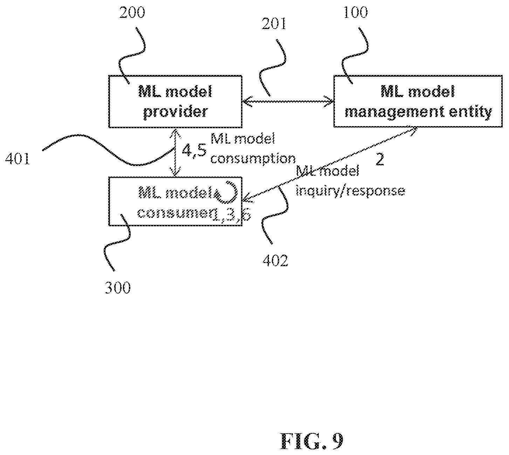

FIG. 9 illustrates the usage of data model family information 102 for data model discovery, retrieval, and processing at the third network entity 300. This may include the following steps:
1. Determine the data model discovery request 402 (e.g., analytics ID, initial model ID/model family, model generation), e.g. based on a previously received data model information from the second network entity 200, and send the discovery request 402 to the first network entity 100.
2. Receive information (e.g., an address of the correspondent data model provider (second network entity 200), a local trained data model ID at the data model provider, a data model generation number 502, data model family ID 501, etc.) of one or more discovered trained data models 500.
3. Further select one or more trained data models 500 based on the received information from the first network entity 100 (e.g., initial model ID, model generation number, area of interest...). Send the data model consumption request 401 to the one or more selected second network entities 200 (e.g., data model provider NWDAF(s)).
4. Receive the request trained data model(s) 500.
5. Further processing using the received trained data model(s) information (including model family ID 501, model generation number 502), e.g., combining, or performing further training, or, validating, or further data model discovery, or use for data analytics.

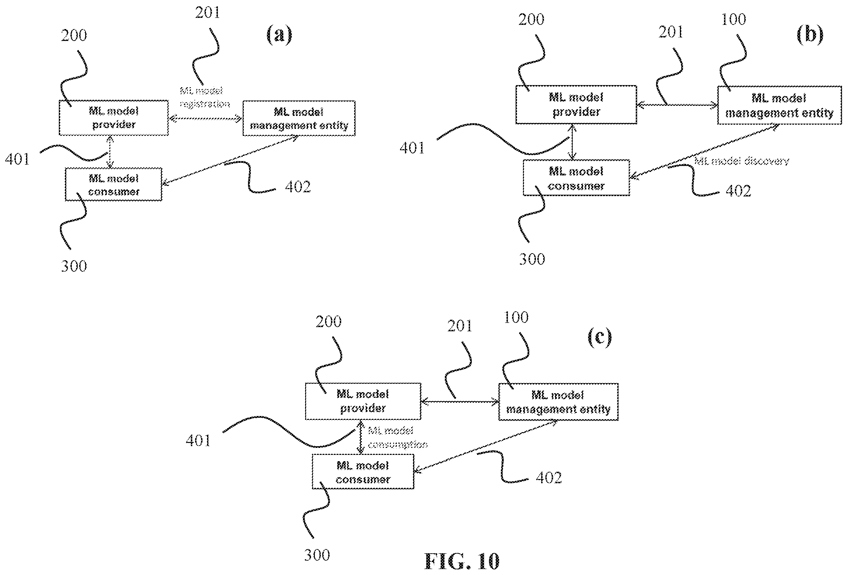

FIG. 10 illustrates signaling for data model registration (FIG. 10(a)), data model discovery (FIG. 10(b)), and data model consumption (FIG. 10(c), respectively.

For data model registration (FIG. 10(a)), a data model registration request 201 is sent from the second network entity 200 to the first network entity 100. The registration request 201 may include at least one of:
- An initial model identifier for a trained data model 500 to be registered.
- One or more model parents for a trained data model 500 to be registered: e.g., represented by (provider NF ID and Local Model ID) or global Model ID, or NULL in case of an initial model
- A model generation number (if known) or a proposed model generation number for a trained data model 500 to be registered.
- An analytics ID
- A local data model ID for a trained data model 500 to be registered.

A data model registration response message may be sent from the first network entity 100 to the second network entity 200 in response to the discovery request 201, wherein the response message may include at least one of:
- A model family ID 501 for a registered trained data model 500.
- A model generation number 502 for a registered trained data model 500.

For data model discovery (FIG. 10(b)), a data model discovery request 402 is sent from the third network entity 300 to the first network entity 100 NRF, wherein the discovery request 402 may include at least one of:
- An analytics ID + additional information (e.g., area of Interest, etc.)
- An initial model identifier or model family ID for a data model 500 to be discovered.
- A range of model generation numbers for a data model 500 to be discovered: (e.g., 0, 0 and 1, all, 2~3, >2).

A data model response message may be sent from the first network entity 100 to the third network entity 300, wherein the data model response message may include at least one of:
- An address of a data model provider for a discovered trained data model 500, e.g., the address of the second network entity 200.
- A model family ID 501 for a discovered trained data model 500.
- A model generation number 502 for a discovered trained data model 500.
- A local Model ID for a discovered trained data model 500.

For data model consumption (FIG. 10(c)), a data model consumption request 401 is sent from the third network entity 300 to the second network entity 200, wherein the consumption request 401 includes at least one of:
- An analytics ID and/or additional information (e.g., area of Interest, etc.) for a trained data model 500 to be consumed.
- An initial model identifier/model family ID 501, if known, for a trained data model 500 to be consumed.
- A local model ID for a trained data model 500 to be consumed.

A data model provided in response to the consumption request 401 from the second network entity 200 to the third network entity 300 may include additional info of:
- A model family ID 501 for the trained data model 500
- A model generation number for the trained data model 500.

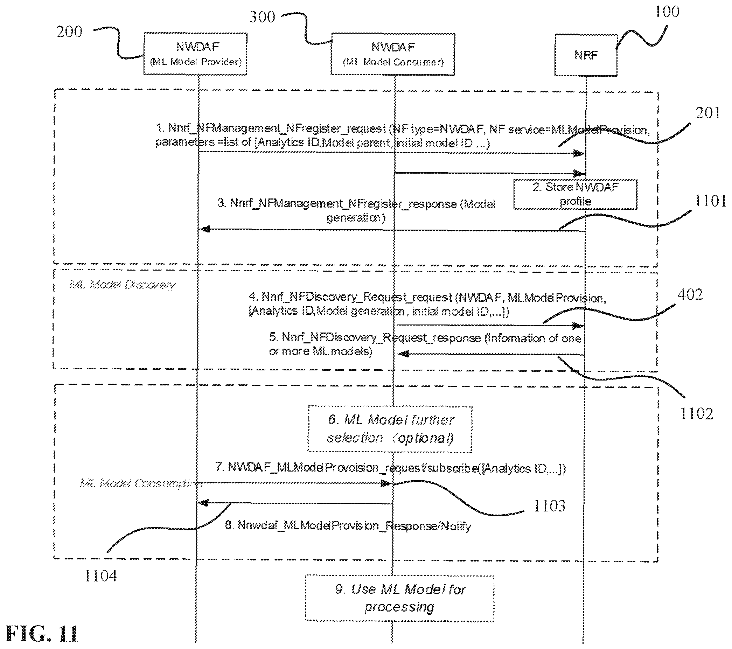

FIG. 11 shows an example procedure for data model registration, discovery, and consumption, respectively, performed by a model provider NWDAF (second network entity 200), a model consumer NWDAF (third network entity 300) and a NRF (first network entity 100).

### Data model registration phase:

1. The NWDAF 200 sends a data model registration request 201 (e.g., including analytics ID, initial model ID, model parent(s)) to the NRF 100.
2. The NRF 100 stores the data model information 101 in the request 201 at the NRF 100.
3. The NRF 100 indicates a successful registration with a registration response 1101 including, per registered data model 500, a model generation number 502 and/or model family ID 501.

### Data model discovery phase:

4. The NWDAF 300 sends a data model discovery request 402 to the NRF 100 (e.g., including analytics ID, model family ID/initial model ID, model generation number).
5. The NRF 100 selects one or more trained data models 500 by checking the entries of the registered data models 500, and sends the information of the discovered data models 500 (e.g., an address of the correspondent NWDAFs 200, model generation number 502, model family ID 501, etc.) in a discovery response 1102 to the NWDAF 300.

### Data model consumption phase:

6. The NWDAF 300 further selects one or more trained data models 500 based on the information received from NRF 100 (e.g., model family ID 501, model generation number 502, area of interest...).
7. The NWDAF 300 sends a data model consumption request 401 to one or more selected provider NWDAF(s) 200.
8. The NWDAF 300 receives the requested trained data model(s) 500 from the data model provider NWDAF(s) 200 in a provision response 1103 to the consumption request (e.g. including model family ID 501, model generation number 502).
9. The NWDAF 300 uses the received trained data model(s) 500 for further processing (e.g., inference, further training, combining).

In one implementation, the third network entity 300 can use the data model family information 100 to obtain an initial data model:
- The third network entity 300 sends a data model discovery request 402 to the first network entity 100 with "Initial model identifier/model family = X, model generation = 0 ~ 1".
- The third network entity 300 selects and obtains the trained data model 500 with the lowest generation number 502 discovered via the first network entity 100.

In another implementation, the third network entity 300 can use data model family information 102 to obtain a further trained data model 500:
- The third network entity 300 sends a data model discovery request 402 to the first network entity 100 with "Initial model identifier/model family = X, model generation > 0".
- The third network entity 300 selects and obtains one trained data model 500 from the ones discovered via the first network entity 100.

In another implementation, the third network entity 300 can use data model family information 102 to validate a trained data model 500.
- The third network entity 300 wants to validate a trained data model 500 with "Initial model identifier/model family = X, model generation = N".
- The third network entity 300 sends a data model discovery request 402 to the first network entity 100 with "Initial model identifier/model family = X, model generation = N-1~N".
- The third network entity 300 obtains the trained data models 500 discovered via the first network entity 100 and compares the analytics generated by them with the analytics generated by the to be validated trained data model 500.

In another implementation, the third network entity 300 can use model family information 102 to select from or combine multiple trained data models 500.
- The third network entity 300 sends a data model discovery request 402 to the first network entity 100 with "Initial model identifier/model family = X, model generation = n-1, n, n+1".
- The third network entity 300 obtains the trained data models 500 discovered via the first network entity 100.
- The third network entity 300 selects the one that shows the best accuracy in the local test. Or it combine them (e.g., sums up the linear regressive data models 500 with some weighting factor) based on certain selection/combine criteria (e.g., area of interest, model generation (lower/higher generation preferred) for further processing.

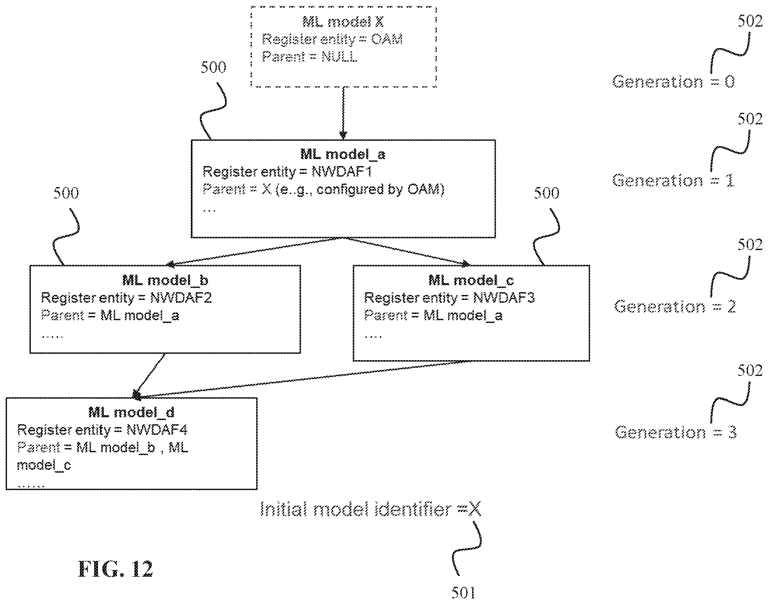

FIG. 12 shows an example data structure for data model family information 102 in a first network entity 100 (NRF), wherein an OAM 700 configures an initial data model in the data model family information 102.

In one implementation, the OAM 700 can configure a data model 500 directly in the first network entity (e.g., NRF) without sending a registration request (compare also FIG. 7). The configured trained data model 500 can be, for example, an initial data model provided by the operator or a 3^{rd} party. In this case, the first network entity 100 may keep the URL or an address pointing to where the trained data model 500 is stored and responds to a data model discovery request 402 with that URL instead of with the address of the actual data model provider (e.g., of the second network entity 200 being an OAM 700 or management plane network function). In such cases, the Register entity will be set to "OAM", "external entity", etc., and the data model parent is set to "NULL" as shown in FIG. 12.

In an implementation, the first network entity 100 may check or validate the registered data model information 101 before inserting it into the data model family information 102. The validation may include a consistency check of the data model family information reported by or derived from different data model registration information 101 of the same trained data model 500. For example, comparing the parent model information registered by a data model provider entity 200 of a trained data model 500 with the parent model information directly registered by the original data model provider 200 or configured by OAM 700.

In case of an inconsistency (e.g., a wrong model family), the first network entity 100 may not update the data model family information 102. It may respond to the data model provider entity 200 with a registration NACK message indicating a mismatch of the data model 500 to be registered. In another implementation (e.g., wrong generation number in the data model registration information 101), the first network entity 100 may still update the data model family information 102 and may respond to the data model provider entity 200 with an ACK message including the corrected generation number 502.

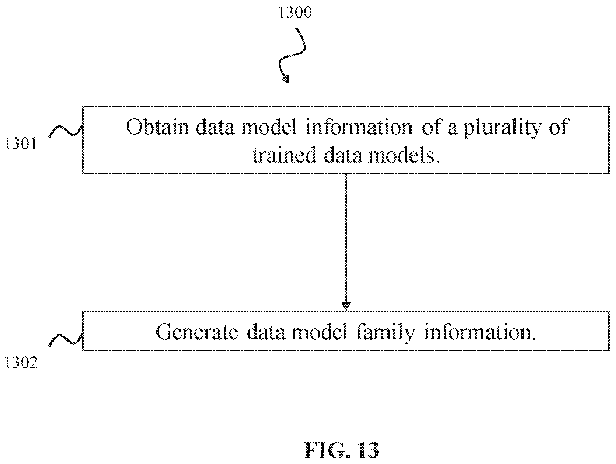

FIG. 13 illustrates a flow-diagram of a method 1300 for managing data model information, the method 1300 being performed by a first network entity 100 as described above. The method 1300 comprises a step 1301 of obtaining data model information of a plurality of trained data models and a step 1302 of generating data model family information 102. The data model family information 102 comprises a generation number 502 and/or a family ID 501 of each trained data model 500 of the plurality of trained data models500.

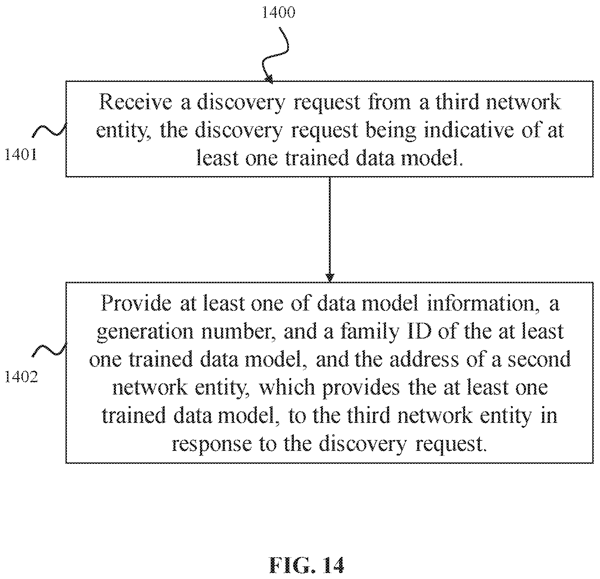

FIG. 14 illustrates a flow-diagram of a method 1400 for managing data model information, the method 1400 being performed by a first network entity (100) as described above. The method 1400 comprises a step 1401 of receiving a discovery request 402 from a third network entity 300 as described above. The discovery request 402 is indicative of at least one trained data model 500 of a plurality of trained data models 500. The discovery request may accordingly be for a trained data model. The discovery request may comprise data model family information related to the trained data model. The method 1400 further comprises a step 1402 of providing at least one of data model information 101, a generation number 502, and a family ID 501 of the at least one trained data model 500 to the third network entity 300, and providing the address of a second network entity 200, which provides the at least one trained data model 500, to the third network entity 300 in response to the discovery request 402. To this end, the method 1400 may comprise a step of determining the at least one data model based on data model family information in the discovery request, before the step 1402.

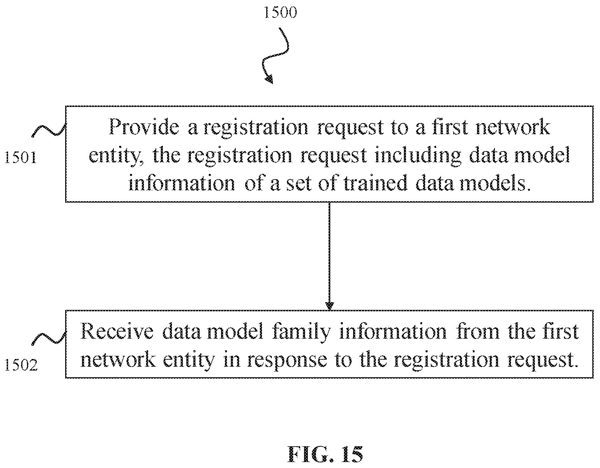

Fig. 15 illustrates a flow-diagram of a method 1500 for providing one or more trained data models 500, the method 1400 being performed by a second network entity 200 as described above. The method 1500 comprises a step 1501 of providing a registration request 201 to a first network entity 100, the registration request 201 including data model information 101 of a set of trained data models 500. Further, the method 1500 comprises a step 1502 of receiving data model family information 102 from the first network entity 100 in response to the registration request 201, the data model family information 102 comprising a generation number 502 and/or a family ID 501 of each trained data model 500 of the set of trained data models 500.

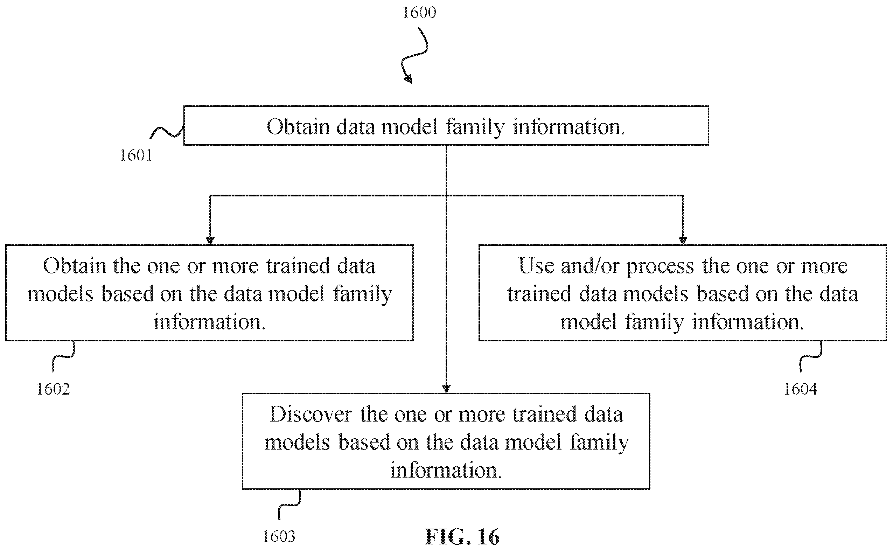

FIG. 16 illustrates a flow-diagram of a method 1600 for consuming one or more trained data models 500, the method 1600 being performed by a third network entity 300 as described above. The method 1600 comprises a step 1601 of obtaining 1601 data model family information 102, the data model family information 102 comprising a generation number 502 and/or a family ID 501 of each trained data model 500 of the one or more trained data models 500. Further, the method 1600 further comprises at least one of the following steps. A step 1602 of obtaining the one or more trained data models 500 based on the data model family information 102. A step 1603 of discovering the one or more trained data models 500 based on the data model family information 102. A step 1604 of using and/or processing the one or more trained data models 500 based on the data model family information 102.

In summary, the present disclosure provides a simple data model management procedure to track the training history of a data model 500 by different network entities. The third network entity 300 (data model consumer) is able to accurately identify one or more trained data model(s) 500 without knowing the complete training history of the trained data model(s) 500. This leads to the following advantages comparing to other approaches:
A more robust data model 500 retrieving with more choices is achieved (e.g., retrained multiple models 500 with the same or different generation numbers 502 from different sources), in case some data model 500 is not available. Further, it is possible to use more accurate data models 500 by selecting and/or combining trained data models 500 of the same or different generation numbers 502 and/or from different sources. In addition, a reduced signaling is obtained, and avoiding the retrieval of unnecessary data models 500 (i.e., interaction with the "wrong" data model providers, traffic to retrieve the "wrong" data models). It is also possible to validate a trained data model 500 by the usage of the generation number 502 and/or family ID 501 (e.g., original model information). For instance, by comparing trained data models 500 provided by different NWDAFs with the same original model/parent model. Finally, there is also no need for synchronization of a global unique model version or ID comparing to full centralized version management.

## Claims

1. A first network entity (100) for managing data model information, the first network entity (100) being configured to:
obtain data model information (101) of a plurality of trained data models (503); and
generate data model family information (102);
wherein the data model family information (102) comprises a generation number (502) and/or a family ID (501) of each trained data model (503) of the plurality of trained data models (503),
wherein the data model family information (102) further comprises relationship information between two or more trained data models (500) belonging to the same data model family,
wherein the relationship information between the two or more trained data models (500) belonging to the same data model family indicates a hierarchy and/or a tree-like structure of the two or more trained data models (500); and/or
wherein the relationship information between the two or more trained data models (500) belonging to the same data model family indicates whether a trained data model (500) of the two or more trained data models (500) is at least one of a parent data model and a child data model of another trained data model (500) of the two or more trained data models (500).

2. The first network entity (100) according to claim 1, wherein:
the family ID (501) of each trained data model (500) indicates to which of one or more data model families the trained data model (500) belongs to.

3. The first network entity (100) according to claim 1 or 2, wherein:
the data model information (101) of a respective trained data model (500) comprises at least one of:
an identification, ID, of the respective trained data model (500);
ID(s) of one or more parent data model of the respective trained data model (500);
an ID of an initial data model related to the respective trained data model (500);
an analytics ID related to the respective trained data model (500).

4. The first network entity (100) according to one of the claims 1 to 3, further configured to:
receive a registration request (201) from a second network entity (200), the registration request (201) including data model information (101) of a set of trained data models of the plurality of trained data models (500), and an address of the second network entity (200); and
provide the generation number (502) and/or the family ID (501) of each trained data model (500) of the set of trained data models to the second network entity (200) or provide the generated data model family information (102) to the second network entity (200), in response to the registration request (201).

5. The first network entity (100) according to claim 4, further configured to:
receive a discovery request (402) from a third network entity (300), wherein the discovery request (402) is indicative of at least one trained data model (500) of the plurality of trained data models (500); and
provide at least one of the data model information (101), the generation number (502), and the family ID (501) of the at least one trained data model (500) to the third network entity (300), and provide the address of the second network entity (200) to the third network entity (300), in response to the discovery request (402).

6. The first network entity (100) according to claim 5, wherein:
the discovery request (402) comprises at least one of an analytics ID, a family ID (501), a generation number (502), or a range of generation numbers (502).

7. A second network entity (200) for providing one or more trained data models (500), the second network entity (200) being configured to:
provide a registration request (201) to a first network entity (100), the registration request (201) including data model information (101) of a set of trained data models provided by the second network entity (200); and
receive data model family information (102) from the first network entity (100) in response to the registration request (201), the data model family information (102) comprising a generation number (502) and/or a family ID (501) of each trained data model (500) of the set of trained data models,
wherein the data model family information (102) further comprises relationship information between two or more trained data models (500) belonging to the same data model family,
wherein the relationship information between the two or more trained data models (500) belonging to the same data model family indicates a hierarchy and/or a tree-like structure of the two or more trained data models (500); and/or
wherein the relationship information between the two or more trained data models (500) belonging to the same data model family indicates whether a trained data model (500) of the two or more trained data models (500) is at least one of a parent data model and a child data model of another trained data model (500) of the two or more trained data models (500).

8. A third network entity (300) for consuming one or more trained data models (500), the third network entity (300) being configured to:
obtain data model family information (102), the data model family information (102) comprising a generation number (502) and/or family ID (501) of each trained data model (500) of the one or more trained data models (500),
wherein the data model family information (102) further comprises relationship information between two or more trained data models (500) belonging to the same data model family,
wherein the relationship information between the two or more trained data models (500) belonging to the same data model family indicates a hierarchy and/or a tree-like structure of the two or more trained data models (500); and/or
wherein the relationship information between the two or more trained data models (500) belonging to the same data model family indicates whether a trained data model (500) of the two or more trained data models (500) is at least one of a parent data model and a child data model of another trained data model (500) of the two or more trained data models (500);
wherein the third network entity (300) is further configured to:
obtain the one or more trained data models (500) based on the data model family information (102); and/or
use and/or process the one or more trained data models (500) based on the data model family information (102); and/or
discover the one or more trained data models (500) based on the data model family information (102).

9. A method (1300) for managing data model information, the method (1300) being performed by a first network entity (100) and comprising:
obtaining (1301) data model information (101) of a plurality of trained data models (500); and
generating (1302) data model family information (102);
wherein the data model family information (102) comprises a generation number (502) and/or a family ID (501) of each trained data model (500) of the plurality of trained data models (500),
wherein the data model family information (102) further comprises relationship information between two or more trained data models (500) belonging to the same data model family,
wherein the relationship information between the two or more trained data models (500) belonging to the same data model family indicates a hierarchy and/or a tree-like structure of the two or more trained data models (500); and/or
wherein the relationship information between the two or more trained data models (500) belonging to the same data model family indicates whether a trained data model (500) of the two or more trained data models (500) is at least one of a parent data model and a child data model of another trained data model (500) of the two or more trained data models (500).

10. A method (1400) for managing data model information, the method (1400) being performed by a first network entity (100) and comprising:
receiving (1401) a discovery request (402) from a third network entity (300), wherein the discovery request (402) is indicative of at least one trained data model (500) of a plurality of trained data models (500);
providing (1402) at least one of data model information (101), a generation number (502), and a family ID (501) of the at least one trained data model (500) to the third network entity (300),
providing relationship information between two or more trained data models (500) belonging to the same data model family,
wherein the relationship information between the two or more trained data models (500) belonging to the same data model family indicates a hierarchy and/or a tree-like structure of the two or more trained data models (500), and/or
wherein the relationship information between the two or more trained data models (500) belonging to the same data model family indicates whether a trained data model (500) of the two or more trained data models (500) is at least one of a parent data model and a child data model of another trained data model (500) of the two or more trained data models (500); and
providing the address of a second network entity (200), which provides the at least one trained data model (500), to the third network entity (300) in response to the discovery request (402).

11. A method (1500) for providing one or more trained data models (500), the method (1400) being performed by a second network entity (200) and comprising:
providing (1501) a registration request (201) to a first network entity (100), the registration request (201) including data model information (101) of a set of trained data models (500); and
receiving (1502) data model family information (102) from the first network entity (100) in response to the registration request (201), the data model family information (102) comprising a generation number (502) and/or a family ID (501) of each trained data model (500) of the set of trained data models (500),
wherein the data model family information (102) further comprises relationship information between two or more trained data models (500) belonging to the same data model family,
wherein the relationship information between the two or more trained data models (500) belonging to the same data model family indicates a hierarchy and/or a tree-like structure of the two or more trained data models (500); and/or
wherein the relationship information between the two or more trained data models (500) belonging to the same data model family indicates whether a trained data model (500) of the two or more trained data models (500) is at least one of a parent data model and a child data model of another trained data model (500) of the two or more trained data models (500).

12. A method (1600) for consuming one or more trained data models (500), the method (1600) being performed by a third network entity (300) and comprising:
obtaining (1601) data model family information (102), the data model family information (102) comprising a generation number (502) and/or a family ID (501) of each trained data model (500) of the one or more trained data models (500),
wherein the data model family information (102) further comprises relationship information between two or more trained data models (500) belonging to the same data model family,
wherein the relationship information between the two or more trained data models (500) belonging to the same data model family indicates a hierarchy and/or a tree-like structure of the two or more trained data models (500); and/or
wherein the relationship information between the two or more trained data models (500) belonging to the same data model family indicates whether a trained data model (500) of the two or more trained data models (500) is at least one of a parent data model and a child data model of another trained data model (500) of the two or more trained data models (500);
wherein the method further comprises:
obtaining (1602) the one or more trained data models (500) based on the data model family information (102); and/or
using and/or processing (1604) the one or more trained data models (500) based on the data model family information (102); and/or
discovering (1603) the one or more trained data models (500) based on the data model family information (102).

13. A computer program comprising a program code for, when running on a computer, causing the method (1300, 1400, 1500, 1600) of claim 9, 10, 11, or 12 to be performed.

## Patentansprüche

1. Erste Netzwerkeinheit (100) zum Verwalten von Datenmodellinformationen, wobei die erste Netzwerkeinheit (100) konfiguriert ist zum:
Erlangen von Datenmodellinformationen (101) einer Vielzahl von trainierten Datenmodellen (503); und
Generieren von Datenmodellfamilieninformationen (102);
wobei die Datenmodellfamilieninformationen (102) eine Generationsnummer (502) und/oder eine Familien-ID (501) jedes trainierten Datenmodells (503) der Vielzahl von trainierten Datenmodellen (503) umfassen,
wobei die Datenmodellfamilieninformationen (102) ferner Beziehungsinformationen zwischen zwei oder mehr trainierten Datenmodellen (500) umfassen, die zu derselben Datenmodellfamilie gehören,
wobei die Beziehungsinformationen zwischen den zwei oder mehr trainierten Datenmodellen (500), die zu derselben Datenmodellfamilie gehören, eine Hierarchie und/oder eine baumartige Struktur der zwei oder mehr trainierten Datenmodelle (500) angeben; und/oder
wobei die Beziehungsinformationen zwischen den zwei oder mehr trainierten Datenmodellen (500), die zu derselben Datenmodellfamilie gehören, angeben, ob ein trainiertes Datenmodell (500) der zwei oder mehr trainierten Datenmodelle (500) mindestens eines von einem übergeordneten Datenmodell und einem untergeordneten Datenmodell eines anderen trainierten Datenmodells (500) der zwei oder mehr trainierten Datenmodelle (500) ist.

2. Erste Netzwerkeinheit (100) nach Anspruch 1, wobei:
die Familien-ID (501) jedes trainierten Datenmodells (500) angibt, zu welcher der einen oder mehreren Datenmodellfamilien das trainierte Datenmodell (500) gehört.

3. Erste Netzwerkeinheit (100) nach Anspruch 1 oder 2, wobei
die Datenmodellinformationen (101) eines jeweiligen trainierten Datenmodells (500) mindestens eines umfassen von:
einer Identifikation, ID, des jeweiligen trainierten Datenmodells (500);
ID(s) eines oder mehrerer übergeordneter Datenmodelle des jeweiligen trainierten Datenmodells (500);
einer ID eines anfänglichen Datenmodells, die sich auf das jeweilige trainierte Datenmodell (500) bezieht;
einer Analyse-ID, die sich auf das jeweilige trainierte Datenmodell (500) bezieht.

4. Erste Netzwerkeinheit (100) nach einem der Ansprüche 1 bis 3, die ferner konfiguriert ist zum:
Empfangen einer Registrierungsanforderung (201) von einer zweiten Netzwerkeinheit (200), wobei die Registrierungsanforderung (201) Datenmodellinformationen (101) eines Satzes von trainierten Datenmodellen aus der Vielzahl von trainierten Datenmodellen (500) und eine Adresse der zweiten Netzwerkeinheit (200) einschließt; und
Bereitstellen der Generationsnummer (502) und/oder der Familien-ID (501) jedes trainierten Datenmodells (500) aus dem Satz von trainierten Datenmodellen an die zweite Netzwerkeinheit (200) oder Bereitstellen der generierten Datenmodellfamilieninformationen (102) an die zweite Netzwerkeinheit (200) als Antwort auf die Registrierungsanforderung (201).

5. Erste Netzwerkeinheit (100) nach Anspruch 4, die ferner konfiguriert ist zum:
Empfangen einer Ermittlungsanforderung (402) von einer dritten Netzwerkeinheit (300), wobei die Ermittlungsanforderung (402) mindestens ein trainiertes Datenmodell (500) aus der Vielzahl von trainierten Datenmodellen (500) angibt; und
Bereitstellen von mindestens einem von den Datenmodellinformationen (101), der Generationsnummer (502) und der Familien-ID (501) des mindestens einen trainierten Datenmodells (500) an die dritte Netzwerkeinheit (300) und Bereitstellen der Adresse der zweiten Netzwerkeinheit (200) an die dritte Netzwerkeinheit (300) als Antwort auf die Ermittlungsanforderung (402).

6. Erste Netzwerkeinheit (100) nach Anspruch 5, wobei:
die Ermittlungsanforderung (402) mindestens eines von einer Analyse-ID, einer Familien-ID (501), einer Generationsnummer (502) oder einem Bereich von Generationsnummern (502) umfasst.

7. Zweite Netzwerkeinheit (200) zum Bereitstellen eines oder mehrerer trainierter Datenmodelle (500), wobei die zweite Netzwerkeinheit (200) konfiguriert ist zum:
Bereitstellen einer Registrierungsanforderung (201) an eine erste Netzwerkeinheit (100), wobei die Registrierungsanforderung (201) Datenmodellinformationen (101) eines Satzes trainierter Datenmodelle einschließt, die durch die zweite Netzwerkeinheit (200) bereitgestellt werden; und
Empfangen von Datenmodellfamilieninformationen (102) von der ersten Netzwerkeinheit (100) als Antwort auf die Registrierungsanforderung (201), wobei die Datenmodellfamilieninformationen (102) eine Generationsnummer (502) und/oder eine Familien-ID (501) jedes trainierten Datenmodells (500) aus dem Satz von trainierten Datenmodellen umfassen,
wobei die Datenmodellfamilieninformationen (102) ferner Beziehungsinformationen zwischen zwei oder mehr trainierten Datenmodellen (500) umfassen, die zu derselben Datenmodellfamilie gehören,
wobei die Beziehungsinformationen zwischen den zwei oder mehr trainierten Datenmodellen (500), die zu derselben Datenmodellfamilie gehören, eine Hierarchie und/oder eine baumartige Struktur der zwei oder mehr trainierten Datenmodelle (500) angeben; und/oder
wobei die Beziehungsinformationen zwischen den zwei oder mehr trainierten Datenmodellen (500), die zu derselben Datenmodellfamilie gehören, angeben, ob ein trainiertes Datenmodell (500) der zwei oder mehr trainierten Datenmodelle (500) mindestens eines von einem übergeordneten Datenmodell und einem untergeordneten Datenmodell eines anderen trainierten Datenmodells (500) der zwei oder mehr trainierten Datenmodelle (500) ist.

8. Dritte Netzwerkeinheit (300) zum Nutzen eines oder mehrerer trainierter Datenmodelle (500), wobei die dritte Netzwerkeinheit (300) konfiguriert ist zum:
Erlangen von Datenmodellfamilieninformationen (102), wobei die Datenmodellfamilieninformationen (102) eine Generationsnummer (502) und/oder Familien-ID (501) jedes trainierten Datenmodells (500) des einen oder der mehreren trainierten Datenmodelle (500) umfassen,
wobei die Datenmodellfamilieninformationen (102) ferner Beziehungsinformationen zwischen zwei oder mehr trainierten Datenmodellen (500) umfassen, die zu derselben Datenmodellfamilie gehören,
wobei die Beziehungsinformationen zwischen den zwei oder mehr trainierten Datenmodellen (500), die zu derselben Datenmodellfamilie gehören, eine Hierarchie und/oder eine baumartige Struktur der zwei oder mehr trainierten Datenmodelle (500) angeben; und/oder
wobei die Beziehungsinformationen zwischen den zwei oder mehr trainierten Datenmodellen (500), die zu derselben Datenmodellfamilie gehören, angeben, ob ein trainiertes Datenmodell (500) der zwei oder mehr trainierten Datenmodelle (500) mindestens eines von einem übergeordneten Datenmodell und einem untergeordneten Datenmodell eines anderen trainierten Datenmodells (500) der zwei oder mehr trainierten Datenmodelle (500) ist;
wobei die dritte Netzwerkeinheit (300) ferner konfiguriert ist zum:
Erlangen des einen oder der mehreren trainierten Datenmodelle (500) basierend auf den Datenmodellfamilieninformationen (102); und/oder
Verwenden und/oder Verarbeiten des einen oder der mehreren trainierten Datenmodelle (500) basierend auf den Datenmodellfamilieninformationen (102); und/oder
Ermitteln des einen oder der mehreren trainierten Datenmodelle (500) basierend auf den Datenmodellfamilieninformationen (102).

9. Verfahren (1300) zum Verwalten von Datenmodellinformationen, wobei das Verfahren (1300) durch eine erste Netzwerkeinheit (100) durchgeführt wird und umfasst:
Erlangen (1301) von Datenmodellinformationen (101) einer Vielzahl von trainierten Datenmodellen (500); und
Generieren (1302) von Datenmodellfamilieninformationen (102);
wobei die Datenmodellfamilieninformationen (102) eine Generationsnummer (502) und/oder eine Familien-ID (501) jedes trainierten Datenmodells (500) der Vielzahl von trainierten Datenmodellen (500) umfassen,
wobei die Datenmodellfamilieninformationen (102) ferner Beziehungsinformationen zwischen zwei oder mehr trainierten Datenmodellen (500) umfassen, die zu derselben Datenmodellfamilie gehören,
wobei die Beziehungsinformationen zwischen den zwei oder mehr trainierten Datenmodellen (500), die zu derselben Datenmodellfamilie gehören, eine Hierarchie und/oder eine baumartige Struktur der zwei oder mehr trainierten Datenmodelle (500) angeben; und/oder
wobei die Beziehungsinformationen zwischen den zwei oder mehr trainierten Datenmodellen (500), die zu derselben Datenmodellfamilie gehören, angeben, ob ein trainiertes Datenmodell (500) der zwei oder mehr trainierten Datenmodelle (500) mindestens eines von einem übergeordneten Datenmodell und einem untergeordneten Datenmodell eines anderen trainierten Datenmodells (500) der zwei oder mehr trainierten Datenmodelle (500) ist.

10. Verfahren (1400) zum Verwalten von Datenmodellinformationen, wobei das Verfahren (1400) durch eine erste Netzwerkeinheit (100) durchgeführt wird und umfasst:
Empfangen (1401) einer Ermittlungsanforderung (402) von einer dritten Netzwerkeinheit (300), wobei die Ermittlungsanforderung (402) mindestens ein trainiertes Datenmodell (500) aus einer Vielzahl von trainierten Datenmodellen (500) angibt;
Bereitstellen (1402) von mindestens einem von Datenmodellinformationen (101), einer Generationsnummer (502) und einer Familien-ID (501) des mindestens einen trainierten Datenmodells (500) an die dritte Netzwerkeinheit (300),
Bereitstellen von Beziehungsinformationen zwischen zwei oder mehr trainierten Datenmodellen (500), die zu derselben Datenmodellfamilie gehören,
wobei die Beziehungsinformationen zwischen den zwei oder mehr trainierten Datenmodellen (500), die zu derselben Datenmodellfamilie gehören, eine Hierarchie und/oder eine baumartige Struktur der zwei oder mehr trainierten Datenmodelle (500) angeben, und/oder
wobei die Beziehungsinformationen zwischen den zwei oder mehr trainierten Datenmodellen (500), die zu derselben Datenmodellfamilie gehören, angeben, ob ein trainiertes Datenmodell (500) der zwei oder mehr trainierten Datenmodelle (500) mindestens eines von einem übergeordneten Datenmodell und einem untergeordneten Datenmodell eines anderen trainierten Datenmodells (500) der zwei oder mehr trainierten Datenmodelle (500) ist; und
Bereitstellen der Adresse einer zweiten Netzwerkeinheit (200), die das mindestens eine trainierte Datenmodell (500) bereitstellt, an die dritte Netzwerkeinheit (300) als Antwort auf die Ermittlungsanforderung (402).

11. Verfahren (1500) zum Bereitstellen eines oder mehrerer trainierter Datenmodelle (500), wobei das Verfahren (1400) durch eine zweite Netzwerkeinheit (200) durchgeführt wird und umfasst:
Bereitstellen (1501) einer Registrierungsanforderung (201) an eine erste Netzwerkeinheit (100), wobei die Registrierungsanforderung (201) Datenmodellinformationen (101) eines Satzes von trainierten Datenmodellen (500) einschließt; und
Empfangen (1502) von Datenmodellfamilieninformationen (102) von der ersten Netzwerkeinheit (100) als Antwort auf die Registrierungsanforderung (201), wobei die Datenmodellfamilieninformationen (102) eine Generationsnummer (502) und/oder eine Familien-ID (501) jedes trainierten Datenmodells (500) aus dem Satz von trainierten Datenmodellen (500) umfassen,
wobei die Datenmodellfamilieninformationen (102) ferner Beziehungsinformationen zwischen zwei oder mehr trainierten Datenmodellen (500) umfassen, die zu derselben Datenmodellfamilie gehören,
wobei die Beziehungsinformationen zwischen den zwei oder mehr trainierten Datenmodellen (500), die zu derselben Datenmodellfamilie gehören, eine Hierarchie und/oder eine baumartige Struktur der zwei oder mehr trainierten Datenmodelle (500) angeben; und/oder
wobei die Beziehungsinformationen zwischen den zwei oder mehr trainierten Datenmodellen (500), die zu derselben Datenmodellfamilie gehören, angeben, ob ein trainiertes Datenmodell (500) der zwei oder mehr trainierten Datenmodelle (500) mindestens eines von einem übergeordneten Datenmodell und einem untergeordneten Datenmodell eines anderen trainierten Datenmodells (500) der zwei oder mehr trainierten Datenmodelle (500) ist.

12. Verfahren (1600) zum Nutzen eines oder mehrerer trainierter Datenmodelle (500), wobei das Verfahren (1600) durch eine dritte Netzwerkeinheit (300) ausgeführt wird und umfasst:
Erlangen (1601) von Datenmodellfamilieninformationen (102), wobei die Datenmodellfamilieninformationen (102) eine Generationsnummer (502) und/oder eine Familien-ID (501) jedes trainierten Datenmodells (500) des einen oder der mehreren trainierten Datenmodelle (500) umfassen,
wobei die Datenmodellfamilieninformationen (102) ferner Beziehungsinformationen zwischen zwei oder mehr trainierten Datenmodellen (500) umfassen, die zu derselben Datenmodellfamilie gehören,
wobei die Beziehungsinformationen zwischen den zwei oder mehr trainierten Datenmodellen (500), die zu derselben Datenmodellfamilie gehören, eine Hierarchie und/oder eine baumartige Struktur der zwei oder mehr trainierten Datenmodelle (500) angeben; und/oder
wobei die Beziehungsinformationen zwischen den zwei oder mehr trainierten Datenmodellen (500), die zu derselben Datenmodellfamilie gehören, angeben, ob ein trainiertes Datenmodell (500) der zwei oder mehr trainierten Datenmodelle (500) mindestens eines von einem übergeordneten Datenmodell und einem untergeordneten Datenmodell eines anderen trainierten Datenmodells (500) der zwei oder mehr trainierten Datenmodelle (500) ist;
wobei das Verfahren ferner umfasst:
Erlangen (1602) des einen oder der mehreren trainierten Datenmodelle (500) basierend auf den Datenmodellfamilieninformationen (102); und/oder Verwenden und/oder Verarbeiten (1604) des einen oder der mehreren trainierten Datenmodelle (500) basierend auf den Datenmodellfamilieninformationen (102); und/oder
Ermitteln (1603) des einen oder der mehreren trainierten Datenmodelle (500) basierend auf den Datenmodellfamilieninformationen (102).

13. Computerprogramm, das einen Programmcode umfasst, der bei Ausführung auf einem Computer die Durchführung des Verfahrens (1300, 1400, 1500, 1600) nach Anspruch 9, 10, 11 oder 12 bewirkt.

## Revendications

1. Première entité de réseau (100) permettant de gérer des informations de modèle de données, la première entité de réseau (100) étant configurée pour :
obtenir des informations de modèle de données (101) d'une pluralité de modèles de données entraînés (503) ; et
générer des informations de famille de modèles de données (102) ;
dans laquelle les informations de famille de modèles de données (102) comprennent un numéro de génération (502) et/ou une ID de famille (501) de chaque modèle de données entraîné (503) de la pluralité de modèles de données entraînés (503),
dans laquelle les informations de famille de modèles de données (102) comprennent en outre des informations de relations entre deux modèles de données entraînés ou plus (500) appartenant à la même famille de modèles de données,
dans laquelle les informations de relations entre les deux modèles de données entraînés ou plus (500) appartenant à la même famille de modèles de données indiquent une hiérarchie et/ou une structure arborescente des deux modèles de données entraînés ou plus (500) ; et/ou
dans laquelle les informations de relations entre les deux modèles de données entraînés ou plus (500) appartenant à la même famille de modèles de données indiquent si un modèle de données entraîné (500) des deux modèles de données entraînés ou plus (500) est au moins l'un parmi un modèle de données parent et un modèle de données enfant d'un autre modèle de données entraîné (500) des deux modèles de données entraînés ou plus (500).

2. Première entité de réseau (100) selon la revendication 1, dans laquelle :
l'ID de famille (501) de chaque modèle de données entraîné (500) indique à quelle ou quelles familles de modèles de données, le modèle de données entraîné (500) appartient.

3. Première entité de réseau (100) selon la revendication 1 ou 2, dans laquelle :
les informations de modèle de données (101) d'un modèle de données entraîné respectif (500) comprennent au moins l'un parmi :
une identification, ID, du modèle de données entraîné respectif (500) ;
une ou des ID d'un ou de plusieurs modèles de données parents du modèle de données entraîné respectif (500) ;
une ID d'un modèle de données initial liée au modèle de données entraîné respectif (500) ;
une ID d'analyse liée au modèle de données entraîné respectif (500).

4. Première entité de réseau (100) selon l'une des revendications 1 à 3, configurée en outre pour :
recevoir une demande d'enregistrement (201) en provenance d'une deuxième entité de réseau (200), la demande d'enregistrement (201) comportant des informations de modèle de données (101) d'un ensemble de modèles de données entraînés de la pluralité de modèles de données entraînés (500), et une adresse de la deuxième entité de réseau (200) ; et
fournir le numéro de génération (502) et/ou l'ID de famille (501) de chaque modèle de données entraîné (500) de l'ensemble de modèles de données entraînés à la deuxième entité de réseau (200) ou fournir les informations de famille de modèles de données générées (102) à la deuxième entité de réseau (200), en réponse à la demande d'enregistrement (201).

5. Première entité de réseau (100) selon la revendication 4, configurée en outre pour :
recevoir une demande de découverte (402) en provenance d'une troisième entité de réseau (300), dans laquelle la demande de découverte (402) indique au moins un modèle de données entraîné (500) de la pluralité de modèles de données entraînés (500) ; et
fournir au moins l'un parmi les informations de modèle de données (101), le numéro de génération (502) et l'ID de famille (501) de l'au moins un modèle de données entraîné (500) à la troisième entité de réseau (300), et fournir l'adresse de la deuxième entité de réseau (200) à la troisième entité de réseau (300), en réponse à la demande de découverte (402).

6. Première entité de réseau (100) selon la revendication 5, dans laquelle :
la demande de découverte (402) comprend au moins l'un parmi une ID d'analyse, une ID de famille (501), un numéro de génération (502) ou une série de numéros de génération (502).

7. Deuxième entité de réseau (200) permettant de fournir un ou plusieurs modèles de données entraînés (500), la deuxième entité de réseau (200) étant configurée pour :
fournir une demande d'enregistrement (201) à une première entité de réseau (100), la demande d'enregistrement (201) comportant des informations de modèle de données (101) d'un ensemble de modèles de données entraînés fournis par la deuxième entité de réseau (200) ; et
recevoir des informations de famille de modèles de données (102) en provenance de la première entité de réseau (100) en réponse à la demande d'enregistrement (201), les informations de famille de modèles de données (102) comprenant un numéro de génération (502) et/ou une ID de famille (501) de chaque modèle de données entraîné (500) de l'ensemble de modèles de données entraînés,
dans laquelle les informations de famille de modèles de données (102) comprennent en outre des informations de relations entre deux modèles de données entraînés ou plus (500) appartenant à la même famille de modèles de données,
dans laquelle les informations de relations entre les deux modèles de données entraînés ou plus (500) appartenant à la même famille de modèles de données indiquent une hiérarchie et/ou une structure arborescente des deux modèles de données entraînés ou plus (500) ; et/ou
dans lequel les informations de relations entre les deux modèles de données entraînés ou plus (500) appartenant à la même famille de modèles de données indiquent si un modèle de données entraîné (500) des deux modèles de données entraînés ou plus (500) est au moins l'un parmi un modèle de données parent et un modèle de données enfant d'un autre modèle de données entraîné (500) des deux modèles de données entraînés ou plus (500).

8. Troisième entité de réseau (300) permettant de consommer un ou plusieurs modèles de données entraînés (500), la troisième entité de réseau (300) étant configurée pour :
obtenir des informations de famille de modèles de données (102), les informations de famille de modèles de données (102) comprenant un numéro de génération (502) et/ou une ID de famille (501) de chaque modèle de données entraîné (500) du ou des modèles de données entraînés (500),
dans laquelle les informations de famille de modèles de données (102) comprennent en outre des informations de relations entre deux modèles de données entraînés ou plus (500) appartenant à la même famille de modèles de données,
dans laquelle les informations de relations entre les deux modèles de données entraînés ou plus (500) appartenant à la même famille de modèles de données indiquent une hiérarchie et/ou une structure arborescente des deux modèles de données entraînés ou plus (500) ; et/ou
dans laquelle les informations de relations entre les deux modèles de données entraînés ou plus (500) appartenant à la même famille de modèles de données indiquent si un modèle de données entraîné (500) des deux modèles de données entraînés ou plus (500) est au moins l'un parmi un modèle de données parent et un modèle de données enfant d'un autre modèle de données entraîné (500) des deux modèles de données entraînés ou plus (500) ;
dans laquelle la troisième entité de réseau (300) est configurée pour :
obtenir le ou les modèles de données entraînés (500) sur la base des informations de famille de modèles de données (102) ; et/ou
utiliser et/ou traiter le ou les modèles de données entraînés (500) sur la base des informations de famille de modèles de données (102) ; et/ou
découvrir le ou les modèles de données entraînés (500) sur la base des informations de famille de modèles de données (102).

9. Procédé (1300) permettant de gérer des informations de modèle de données, le procédé (1300) étant réalisé par une première entité de réseau (100) et comprenant :
l'obtention (1301) d'informations de modèle de données (101) d'une pluralité de modèles de données entraînés (500) ; et
la génération (1302) d'informations de famille de modèles de données (102) ;
dans lequel les informations de famille de modèles de données (102) comprennent un numéro de génération (502) et/ou une ID de famille (501) de chaque modèle de données entraîné (500) de la pluralité de modèles de données entraînés (500), dans lequel les informations de famille de modèles de données (102) comprennent en outre des informations de relations entre deux modèles de données entraînés ou plus (500) appartenant à la même famille de modèles de données,
dans lequel les informations de relations entre les deux modèles de données entraînés ou plus (500) appartenant à la même famille de modèles de données indiquent une hiérarchie et/ou une structure arborescente des deux modèles de données entraînés ou plus (500) ; et/ou
dans laquelle les informations de relations entre les deux modèles de données entraînés ou plus (500) appartenant à la même famille de modèles de données indiquent si un modèle de données entraîné (500) des deux modèles de données entraînés ou plus (500) est au moins l'un parmi un modèle de données parent et un modèle de données enfant d'un autre modèle de données entraîné (500) des deux modèles de données entraînés ou plus (500).

10. Procédé (1400) permettant de gérer des informations de modèle de données, le procédé (1400) étant réalisé par une première entité de réseau (100) et comprenant :
la réception (1401) d'une demande de découverte (402) en provenance d'une troisième entité de réseau (300), dans lequel la demande de découverte (402) indique au moins un modèle de données entraîné (500) d'une pluralité de modèles de données entraînés (500) ;
la fourniture (1402) d'au moins l'un parmi des informations de modèle de données (101), un numéro de génération (502) et une ID de famille (501) de l'au moins un modèle de données entraîné (500) à la troisième entité de réseau (300), la fourniture d'informations de relations entre deux modèles de données entraînés ou plus (500) appartenant à la même famille de modèles de données,
dans lequel les informations de relations entre les deux modèles de données entraînés ou plus (500) appartenant à la même famille de modèles de données indiquent une hiérarchie et/ou une structure arborescente des deux modèles de données entraînés ou plus (500), et/ou
dans laquelle les informations de relations entre les deux modèles de données entraînés ou plus (500) appartenant à la même famille de modèles de données indiquent si un modèle de données entraîné (500) des deux modèles de données entraînés ou plus (500) est au moins l'un parmi un modèle de données parent et un modèle de données enfant d'un autre modèle de données entraîné (500) des deux modèles de données entraînés ou plus (500) ; et
la fourniture de l'adresse d'une deuxième entité de réseau (200), qui fournit l'au moins un modèle de données entraîné (500), à la troisième entité de réseau (300) en réponse à la demande de découverte (402).

11. Procédé (1500) permettant de fournir un ou plusieurs modèles de données entraînés (500), le procédé (1400) étant réalisé par une deuxième entité de réseau (200) et comprenant :
la fourniture (1501) d'une demande d'enregistrement (201) à une première entité de réseau (100), la demande d'enregistrement (201) comportant des informations de modèle de données (101) d'un ensemble de modèles de données entraînés (500) ; et
la réception (1502) d'informations de famille de modèles de données (102) en provenance de la première entité de réseau (100) en réponse à la demande d'enregistrement (201), les informations de famille de modèles de données (102) comprenant un numéro de génération (502) et/ou une ID de famille (501) de chaque modèle de données entraîné (500) de l'ensemble de modèles de données entraînés (500),
dans lequel les informations de famille de modèles de données (102) comprennent en outre des informations de relations entre deux modèles de données entraînés ou plus (500) appartenant à la même famille de modèles de données,
dans lequel les informations de relations entre les deux modèles de données entraînés ou plus (500) appartenant à la même famille de modèles de données indiquent une hiérarchie et/ou une structure arborescente des deux modèles de données entraînés ou plus (500) ; et/ou
dans laquelle les informations de relations entre les deux modèles de données entraînés ou plus (500) appartenant à la même famille de modèles de données indiquent si un modèle de données entraîné (500) des deux modèles de données entraînés ou plus (500) est au moins l'un parmi un modèle de données parent et un modèle de données enfant d'un autre modèle de données entraîné (500) des deux modèles de données entraînés ou plus (500).

12. Procédé (1600) permettant de consommer un ou des modèles de données entraînés (500), le procédé (1600) étant réalisé par une troisième entité de réseau (300) et comprenant :
l'obtention (1601) d'informations de famille de modèles de données (102), les informations de famille de modèles de données (102) comprenant un numéro de génération (502) et/ou une ID de famille (501) de chaque modèle de données entraîné (500) du ou des modèles de données entraînés (500),
dans lequel les informations de famille de modèles de données (102) comprennent en outre des informations de relations entre deux modèles de données entraînés ou plus (500) appartenant à la même famille de modèles de données,
dans lequel les informations de relations entre les deux modèles de données entraînés ou plus (500) appartenant à la même famille de modèles de données indiquent une hiérarchie et/ou une structure arborescente des deux modèles de données entraînés ou plus (500) ; et/ou
dans laquelle les informations de relations entre les deux modèles de données entraînés ou plus (500) appartenant à la même famille de modèles de données indiquent si un modèle de données entraîné (500) des deux modèles de données entraînés ou plus (500) est au moins l'un parmi un modèle de données parent et un modèle de données enfant d'un autre modèle de données entraîné (500) des deux modèles de données entraînés ou plus (500) ;
dans lequel le procédé comprend en outre :
l'obtention (1602) du ou des modèles de données entraînés (500) sur la base des informations de famille de modèles de données (102) ; et/ou
l'utilisation et/ou le traitement (1604) du ou des modèles de données entraînés (500) sur la base des informations de famille de modèles de données (102) ; et/ou
la découverte (1603) du ou des modèles de données entraînés (500) sur la base des informations de famille de modèles de données (102).

13. Programme informatique comprenant un code de programme pour, lorsqu'il est exécuté sur un ordinateur, amener le procédé (1300, 1400, 1500, 1600) selon la revendication 9, 10, 11 ou 12 à être réalisé.
